# DEMANDE DE BREVET EUROPEEN

(11) **EP 2 263 859 A1**
(43) Date de publication de la demande: **22.12.2010**
(21) Numéro de dépôt: 10164013.4
(22) Date de dépôt: 27.05.2010
(51) Int. Cl.: B29C 63/24, F17C 1/06

(54) **Procédé de fabrication d'un réservoir composite**

(30) Priorité: 15.06.2009 FR 0953961
(71) Demandeur: L'AIR LIQUIDE, Société Anonyme pour l'Etude et l'Exploitation des Procédés Georges Claude, 75007 Paris (FR)
(72) Inventeur: Ravex, Alain, 38240 Meylan (FR); Wiertz, Thierry, 38640 Claix (FR)
(74) Mandataire: De Cuenca, Emmanuel Jaime

(57) **Abrégé**

Procédé de fabrication d'un réservoir composite de fluide sous pression comprenant une enveloppe interne (1) étanche ayant une épaisseur (d) de travail déterminée, l'enveloppe interne (1) étant revêtue sur sa surface extérieure d'une couche (2) de renforcement mécanique, **caractérisé en ce que** le procédé comprend :
- une étape de réalisation d'une enveloppe interne (1) ayant une épaisseur de fabrication (do) déterminée supérieure à l'épaisseur de travail (d),
- une étape de dépôt, sur la surface extérieure de l'enveloppe interne (1) ayant l'épaisseur de fabrication (do), d'une couche (2) de renforcement mécanique
- une étape d'amincissement de l'enveloppe interne (1) ayant l'épaisseur (do) jusqu'à une épaisseur égale à l'épaisseur (d) de travail déterminée

## Description

La présente invention concerne un procédé de fabrication d'un réservoir composite de fluide sous pression.

L'invention concerne plus particulièrement un procédé de fabrication d'un réservoir composite de fluide sous pression comprenant une enveloppe interne étanche ayant une épaisseur de travail déterminée, l'enveloppe interne étant revêtue, sur sa surface extérieure, d'une couche de renforcement mécanique.

Les réservoirs composites de ce type sont destinés à stocker un fluide sous pression avec une masse la plus faible possible. Ces réservoirs peuvent notamment être utilisés pour le stockage de l'hydrogène, dans des applications automobiles ou spatiales ou autre.

Généralement, les réservoirs composites comportent une enveloppe interne étanche (appelée également « liner ») recouverte d'un bobinage de renforcement (fibres et résine par exemple). L'enveloppe interne, métallique ou plastique, est destinée à contenir le gaz sous pression. Cette enveloppe interne forme une barrière d'étanchéité pour le fluide mais n'assure qu'un rôle mineur dans la tenue structurelle du réservoir. L'épaisseur de l'enveloppe interne est donc généralement choisie faible en particulier si le réservoir est soumis à des contraintes de masse (applications automobiles et spatiales notamment).

La fabrication d'une enveloppe interne métallique (ou plastique) mince (d'épaisseur de l'ordre de quelques dixièmes de mm d'épaisseur) peut poser des problèmes de fabrication (obtention des pièces, leur manutention et leur assemblage dans le cas d'un matériau métallique).

De plus, lorsque qu'une couche de renforcement est bobinée sur l'enveloppe extérieure mince, il est nécessaire de prévoir un maintien mécanique capable de supporter sans déformation l'effort de tension imposé à la fibre bobinée sur l'enveloppe interne. Pour éviter la déformation de l'enveloppe interne, cette dernière peut être mise sous pression lors du bobinage. Selon une autre technique possible, on introduit dans l'enveloppe interne un mandrin rigide (résine, sable, sel, assemblage mécanique) permettant le maintien de l'enveloppe interne lors du bobinage.

Du fait de la faible épaisseur de l'enveloppe interne, l'opération de bobinage est ainsi relativement compliquée.

De plus, la faible épaisseur de l'enveloppe interne est peu compatible avec les contraintes de manutention et de fabrication.

Une solution connue pour résoudre ce problème consiste à prévoir une enveloppe interne (liner) d'épaisseur relativement importante ayant une meilleure tenue aux efforts. Cependant, cette solution pénalise la masse finale du réservoir.

Selon une autre solution, on privilégie la rigidification de l'enveloppe interne lors du bobinage. Comme on l'a vu ci-dessus, cette solution complique la phase de fabrication.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement **caractérisé en ce qu**'il comprend :
- une étape de réalisation d'une enveloppe interne ayant une épaisseur de fabrication déterminée supérieure à l'épaisseur de travail,
- une étape de dépôt, sur la surface extérieure de l'enveloppe interne ayant l'épaisseur de fabrication, d'une couche de renforcement mécanique,
- une étape d'amincissement de l'enveloppe interne ayant l'épaisseur jusqu'à une épaisseur égale à l'épaisseur de travail déterminée.

Par ailleurs, des modes de réalisation de l'invention peuvent comporter l'une ou plusieurs des caractéristiques suivantes :
- l'étape d'amincissement de l'enveloppe interne utilise un usinage chimique réalisé à l'intérieur de l'enveloppe interne,
- l'usinage chimique est réalisé au moyen d'un agent chimique de la famille des composés sodés tel que la soude caustique ou le sulfure de sodium disposé à l'intérieur de l'enveloppe interne,
- l'usinage chimique est réalisé au moyen d'un agent chimique de la famille des composés sodés tel que la soude caustique ou le sulfure de sodium disposé à l'intérieur de l'enveloppe interne,
- l'agent chimique est mis en mouvement relativement l'enveloppe interne, notamment par rotation de l'enveloppe interne,
- l'épaisseur de travail déterminée est comprise entre 10⁻⁴ m et 10⁻³ m et de préférence entre 10⁻¹ mm et 8.10⁻¹ mm et encore plus préférentiellement inférieure à 5.10⁻¹ mm,
- l'épaisseur de fabrication est comprise entre 10⁻³ m et 10⁻² m et de préférence entre 1 mm et 5 mm et encore plus préférentiellement inférieure à 3 mm,
- pendant au moins une partie de l'étape de dépôt d'une couche de renforcement mécanique, un dispositif de rigidification est utilisé dans l'enveloppe interne pour assurer sa tenue,
- l'étape de dépôt d'une couche de renforcement mécanique est réalisée par bobinage d'un matériau composite,
- l'étape de dépôt d'une couche de renforcement mécanique comporte une étape de polymérisation du matériau composite bobiné,
- l'enveloppe interne étanche comprend un matériau métallique ou un alliage métallique,
- l'agent chimique utilisé lors de l'étape d'usinage chimique remplit partiellement ou totalement le volume intérieur de l'enveloppe interne,
- le dispositif de rigidification utilisé dans l'enveloppe interne pour assurer sa tenue comprend au moins l'un parmi : un mandrin rigide, de la résine, du sable, du sel, un assemblage mécanique.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- les figures 1 à 3 représentent une vue en coupe, schématiques et partielles, illustrant trois étapes successives de la fabrication d'un réservoir selon l'invention,
- la figure 4 représente des vue en coupe, schématique et partielle, illustrant un exemple de réalisation de réservoir obtenu selon l'invention.

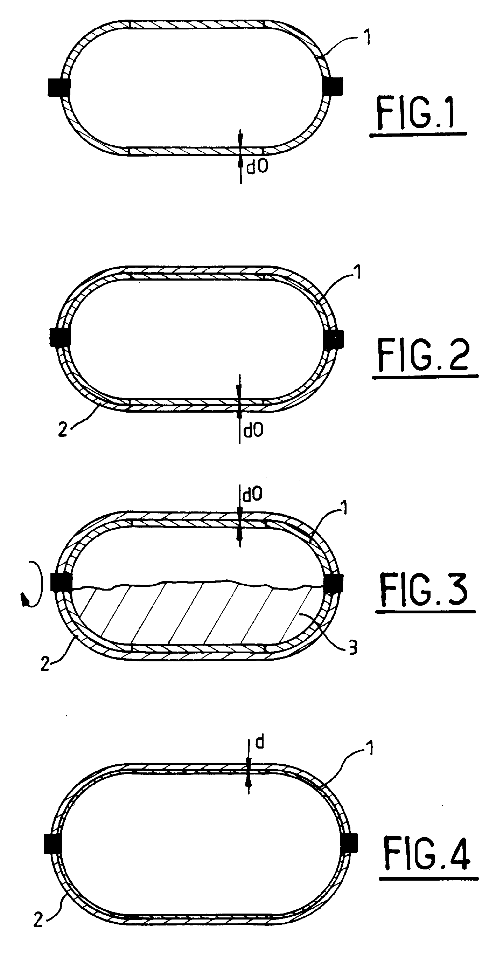

En se référant aux figures, le procédé de fabrication d'un réservoir composite selon l'invention peut comporter une première étape de fabrication d'une enveloppe (liner métallique ou polymère par exemple) ayant une épaisseur dite « de fabrication » do déterminée (cf. figure 1). Cette épaisseur de fabrication do est supérieure à l'épaisseur dite « de travail » d qui est requise pour l'enveloppe 1 du réservoir fini.

L'enveloppe interne 1 d'épaisseur de fabrication do peut être réalisée par des procédés classiques (en polymère obtenu par rotomoulage ou par emboutissage, usinage, soudage d'ébauches métalliques).

L'épaisseur d de travail est par exemple comprise entre 10⁻⁴ m et 10⁻³ m et de préférence entre 10⁻¹ mm et 8.10⁻¹ mm et encore plus préférentiellement inférieure à 5.10⁻¹ mm.

L'épaisseur de fabrication do est par exemple comprise entre 10⁻³ m et 10⁻² m et de préférence entre 1 mm et 5 mm et encore plus préférentiellement inférieure à 3 mm.

Au cours d'une seconde étape de fabrication (cf. figure 2), une couche de renforcement 2 est déposée sur au moins une partie de la surface extérieure de l'enveloppe 1 interne. Cette couche de renforcement 2 peut être réalisée selon des techniques connues (bobinage de fibres imprégnées de résine par exemple).

L'épaisseur de fabrication do permettra à l'enveloppe interne 1 de mieux supporter les efforts générés lors du dépôt de la couche de renforcement 2.

Cependant, il peut tout de même être prévu une opération de maintien (mise en pression ou rigidification) de l'enveloppe interne 1 lors du bobinage pour protéger encore plus l'enveloppe interne 1. L'épaisseur de fabrication do facilite également le processus de maintien.

A l'issue du bobinage, le système de maintien est retiré.

Le procédé peut ensuite comporter une étape de polymérisation ou de solidification de la couche de renforcement 2 disposée sur l'enveloppe interne 1.

Dans une étape ultérieure, le procédé de fabrication comprend une réduction (« amincissement ») de l'épaisseur d'au moins une partie de l'enveloppe interne 1 jusqu'à atteindre l'épaisseur d de travail pré-déterminée.

Cette réduction de l'épaisseur est réalisée de préférence par usinage chimique. C'est-à-dire que le réservoir est rempli au moins partiellement d'un agent chimique d'usinage (cf. figure 3).

Par exemple, pour une enveloppe interne en aluminium, l'agent d'usinage chimique 3 appartient de la famille chimique des composés sodés tel que la soude caustique ou le sulfure de sodium.

Selon une particularité possible, le réservoir peut être mis en rotation autour de son axe horizontal pour assurer un usinage uniforme de l'intérieur de l'enveloppe interne 1. Cet usinage uniforme peut être obtenu, par exemple en appliquant une vitesse de rotation constante au réservoir.

Le procédé selon l'invention permet ainsi d'obtenir un réservoir composite ayant une enveloppe interne 1 (liner) relativement mince tout en diminuant les problèmes de fabrication selon l'art antérieur.

Lors du bobinage, l'enveloppe relativement plus épaisse (épaisseur d fabrication do) facilite la fabrication.

## Revendications

1. Procédé de fabrication d'un réservoir composite de fluide sous pression comprenant une enveloppe interne (1) étanche ayant une épaisseur (d) de travail déterminée, l'enveloppe interne (1) étant revêtue sur sa surface extérieure d'une couche (2) de renforcement mécanique, le procédé comprenant ;
- une étape de réalisation d'une enveloppe interne (1) ayant une épaisseur de fabrication (do) déterminée supérieure à l'épaisseur de travail (d),
- une étape de dépôt, sur la surface extérieure de l'enveloppe interne (1) ayant l'épaisseur de fabrication (do), d'une couche (2) de renforcement mécanique
- une étape d'amincissement de l'enveloppe interne (1) ayant l'épaisseur
(do) jusqu'à une épaisseur égale à l'épaisseur (d) de travail déterminée, **caractérisé en ce que**, pendant au moins une partie de l'étape de dépôt d'une couche (2) de renforcement mécanique, un dispositif de rigidification est utilisé dans l'enveloppe interne (1) pour assurer sa tenue.

2. Procédé selon la revendication 1, **caractérisé en ce que** l'étape d'amincissement de l'enveloppe interne (1) utilise un usinage chimique réalisé à l'intérieur de l'enveloppe interne (1).

3. Procédé selon la revendication 2, **caractérisé en ce que** l'usinage chimique est réalisé au moyen d'un agent chimique (3) de la famille des composés sodés tel que la soude caustique ou le sulfure de sodium disposé à l'intérieur de l'enveloppe interne (1).

4. Procédé selon l'une la revendication 3, **caractérisé en ce que** l'agent chimique est mis en mouvement relativement l'enveloppe interne (1), notamment par rotation de l'enveloppe interne (1).

5. Procédé selon l'une quelconque des revendications 1 à 4, **caractérisé en ce que** l'épaisseur (d) de travail déterminée est comprise entre 10⁻⁴ m et 10⁻³ m et de préférence entre 10⁻¹ mm et 8.10⁻¹ mm et encore plus préférentiellement inférieure à 5.10⁻¹ mm.

6. Procédé selon l'une quelconque des revendications 1 à 5, **caractérisé en ce que** l'épaisseur de fabrication (do) est comprise entre 10⁻³ m et 10⁻² m et de préférence entre 1 mm et 5 mm et encore plus préférentiellement inférieure à 3 mm.

7. Procédé selon l'une quelconque des revendications 1 à 6, **caractérisé en ce que** l'étape de dépôt d'une couche (2) de renforcement mécanique est réalisée par bobinage d'un matériau composite.

8. Procédé selon la revendication 7, **caractérisé en ce que** l'étape de dépôt d'une couche (2) de renforcement mécanique comporte une étape de polymérisation du matériau composite bobiné.

9. Procédé selon l'une quelconque des revendications 1 à 8, **caractérisé en ce que** l'enveloppe interne (1) étanche comprend un matériau métallique ou un alliage métallique.

10. Procédé selon la revendication 9, **caractérisé en ce que** l'agent d'usinage chimique (3) appartient de la famille chimique des composés sodés tel que la soude caustique ou le sulfure de sodium

11. Procédé selon l'une quelconque des revendications 1 à 10, **caractérisé en ce que** le dispositif de rigidification utilisé dans l'enveloppe interne pour assurer sa tenue comprend au moins l'un parmi : un mandrin rigide, de la résine, du sable, du sel, un assemblage mécanique.
